# FASCICULE DE BREVET EUROPEEN

(11) **EP 2 847 058 B1**
(45) Date de publication et mention de la délivrance du brevet: **15.02.2017**
(21) Numéro de dépôt: 13723057.9
(22) Date de dépôt: 07.05.2013
(51) Int. Cl.: B62B 3/06, B62B 5/00

(54) **CHARIOT D'ATELIER A DEMARRAGE ASSISTE COMMANDE PAR BOUTON**
WERKSTATTWAGEN MIT KNOPFGESTEUERTEM UNTERSTÜTZTEM START
WORKSHOP CART WITH BUTTON-CONTROLLED ASSISTED STARTING

(30) Priorité: 11.05.2012 FR 1254354
(43) Date de publication de la demande: 18.03.2015
(73) Titulaire: COUTIER INDUSTRIE, 57970 Basse Ham (FR)
(72) Inventeur: COUTIER, Charles, F-57570 Cattenom (FR)
(74) Mandataire: Lavialle, Bruno François Stéphane
(86) Numéro de dépôt international: PCT/EP2013/059502
(87) Numéro de publication internationale: WO 2013/167599

(56) Documents cités:
- DE-A1-102009 004 404
- US-A- 2 679 302

## Description

La présente invention concerne les chariots de manutention que l'on emploie, par exemple dans les ateliers de montage d'ensembles industriels, pour transporter des composants entre deux lieux (stockage, déstockage, poste de travail, poste de livraison...) où ils sont chargés sur le chariot ou déchargés de ce dernier. Elle concerne également tout moyen de transport de personnes telles que des malades, des blessés ou des personnes à mobilité réduite... dans des établissements de soins, ou entre ces derniers et des véhicules spécialisés.

### ARRIERE PLAN DE L'INVENTION

On connaît des chariots qui sont équipés d'une roue supplémentaire motorisée, rajoutée au chariot déjà pourvu de ses organes de roulement que l'opérateur commande par un interrupteur de l'alimentation du moteur par la batterie associé généralement à un contrôleur qui permet d'optimiser le fonctionnement de cette roue motorisée.

L'invention concerne un mécanisme d'assistance au démarrage mettant en oeuvre cette roue motorisée qui procure à l'opérateur une facilité de manoeuvre du chariot (ou plus généralement d'une base roulante) tout en respectant un certain nombre de contraintes relatives à la sécurité générale de l'utilisation de ce type de matériel.

### OBJET DE L'INVENTION

C'est ainsi que l'invention a pour objet un chariot comportant un châssis de plateforme auquel est fixée une roue motorisée comportant un contrôleur de son fonctionnement, commandé par au moins un interrupteur situé sur un organe de pilotage manuel du chariot, caractérisé en ce que le contrôleur n'autorise un fonctionnement de la roue motorisée qu'à partir de l'activation de l'interrupteur et pour une durée déterminée par temporisation indépendante de l'état de l'interrupteur. Les caractéristiques du préambule de la revendication 1 sont connues du document DE 10 2009 004 404.

Il s'agit là d'un moyen simple pour assurer la sécurité tant du personnel concerné par ce matériel, des personnes et/ou objets transportés que du matériel lui-même et de son environnement. En effet, le chariot est en permanence sous contrôle de son opérateur qui doit réactiver, à la fin de chaque période temporisée, le fonctionnement de la roue, c'est-à-dire au bout d'un trajet que l'on aura déterminé pour qu'il soit parcouru sans danger par le chariot pendant la temporisation (de l'ordre de quelques mètres avec une vitesse de l'ordre de quelques kilomètres/heure par exemple) même hors du contrôle de l'opérateur.

De préférence, le contrôleur est agencé pour modifier la durée de temporisation.

Avantageusement alors, la durée de temporisation est modifiable en fonction d'un état de charge de la batterie et/ou en fonction d'une masse transportée.

Selon un mode de réalisation particulier, la roue motorisée est montée sur le chariot pour être déplaçable entre une position de contact avec le sol et une position décollée du sol, et le contrôleur est agencé pour piloter le moteur de la roue de telle manière que la roue soit en rotation au moment où elle touche le sol et de telle manière que la roue soit également en rotation lorsqu'elle quitte le sol.

Selon une caractéristique particulière, le chariot comporte un timon d'attelage articulé à l'avant de la plateforme entre une position relevée et une position rabattue.

Avantageusement alors, le chariot comporte une roue génératrice d'énergie électrique reliée aux batteries et des moyens de détection de la position du timon qui sont reliées à un organe de commande de la roue génératrice pour mettre en service ladite roue génératrice lorsque le timon est en position abaissée et mettre hors service la roue génératrice lorsque le timon est en position relevée.

D'autres caractéristiques et avantages de l'invention ressortiront de la description donnée ci-après d'un exemple de réalisation de l'invention.

### BREVE DESCRIPTION DES DESSINS

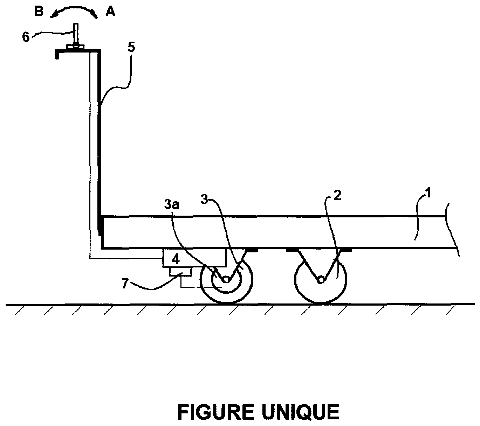

Il sera fait référence aux dessins annexés dans lesquels la figure unique est une représentation schématique de côté partielle d'un chariot selon l'invention.

### DESCRIPTION DETAILLEE DE L'INVENTION

A cette figure, on a schématisé partiellement l'avant d'un chariot dont la plateforme ou base roulante 1 est équipée d'organes de roulement 2 et 3. L'organe de roulement 3 est ici une roue motorisée connue incluant son moteur 3a, des batteries électriques non représentées et un contrôleur 4 du fonctionnement du moteur 3a. Cette roue est ici fixée par une chape classique à la plateforme 1. Il existe des roues sur le marché qui sont articulées au châssis qui les porte entre une position hors service, éloignée du sol et une position en service, en contact avec le sol. L'invention s'y applique également.

Le châssis de cette plateforme est équipé d'un organe de manoeuvre manuelle du chariot sous la forme d'une main courante 5, ou autre, à laquelle est associée un interrupteur 6 ici sous la forme d'un basculeur avant (direction A) et arrière (direction B). Cet interrupteur pourrait avoir la forme d'un ou de deux boutons poussoirs pour commander l'aide au démarrage en marche avant et en marche arrière du chariot.

Cet interrupteur est relié à l'entrée du contrôleur 4 du moteur 3a. Le contrôleur 4 est programmé de sorte que, au changement d'état (fermeture) de l'interrupteur 6, l'alimentation du moteur 4 est assurée pendant une période de temporisation définie et ce quel que soit l'état de l'interrupteur pendant cette période. Les moyens de cette temporisation sont indiqués en 7 sur le schéma. Au terme de cette temporisation, cette alimentation cesse et l'aide au démarrage s'arrête. Une autre fermeture de l'interrupteur est nécessaire pour reprendre l'aide au démarrage et ainsi de suite. La durée de la temporisation est bien entendu réglable en fonction de l'usage du chariot et on peut prévoir de nombreuses variations de cette durée pour adapter la conduite du chariot à tout type d'utilisation.

On notera que dans une version particulièrement simple de l'invention, la puissance du moteur est fixée à sa valeur maximale en permanence. Il en résulte une grande simplicité du contrôleur du moteur.

On peut avoir constaté qu'en l'absence de charge, l'effort manuel de manoeuvre du chariot est inférieur à un seuil dicté par l'ergonomie. Mais rien ne peut empêcher, par exemple, que l'opérateur déclenche l'assistance alors qu'elle n'est pas utile. Pour empêcher ce déclenchement qui conduit à une consommation inutile d'énergie, on indique au contrôleur 4 la présence ou non d'une charge sur la plateforme par un capteur de charge. L'absence de charge inhibe toute mise en service de la roue motorisée.

En variante, on peut détecter la valeur de la charge et agir en conséquence sur les circuits de commande des moyens moteurs d'entraînement pour, par exemple, ajuster la valeur du couple d'assistance à appliquer sur la roue. Ces circuits de commande sont connus en eux-mêmes et comprennent généralement un contrôleur de l'alimentation en énergie électrique du moteur d'assistance sur le programme duquel il est possible d'agir pour par exemple modifier des valeurs de consigne enregistrées.

D'autres fonctions peuvent être implémentées dans le contrôleur 4 de la roue motorisée d'assistance au démarrage. Par exemple, il peut être prévu une progressivité de la mise en service de cette roue afin d'éviter un appel d'énergie trop important au moment du démarrage ou un ajustement de la valeur du couple d'assistance en fonction de la vitesse du chariot... On notera que, dans le cas de l'invention, l'aide au démarrage est conditionnée à une commande de l'opérateur, ceci contrairement à la plupart des véhicules assistés électriquement qui détectent qu'un mouvement a été directement transmis aux véhicules par l'opérateur. Dans le cas d'un chariot d'atelier, attendre l'existence d'un mouvement implique le risque d'imposer un effort ergonomiquement prohibé à l'opérateur pour obtenir ce déplacement.

L'invention est applicable aux chariots qui comportent un timon d'attelage articulé à l'avant de la plateforme dans des paliers. Ce timon peut comporter au niveau de son moyen d'accouplement (anneau, crochet, boîtier, sphère...) des poignées de manoeuvre manuelle du chariot. Lorsque le timon est relevé, un taquet qu'il porte latéralement vient s'engager entre deux butées montées mobiles sur le chariot et pourvues de capteurs reliés au contrôleur 4. Pour rabattre le timon en position basse (position d'attelage dans un train de chariots), l'opérateur doit manuellement escamoter les butées pour extraire le taquet d'entre les butées et abaisser le timon.

Dans cette variante de réalisation, on peut détecter la présence ou non du taquet entre les butées pour mettre respectivement hors ou en service une roue génératrice d'énergie électrique reliée aux batteries et agencée pour fournir de l'énergie électrique lorsqu'elle est forcée à rouler sur le sol. La non présence du taquet entre les butées indique que le timon est abaissé et donc le chariot est dans un train, en convoi, avec un véhicule moteur, ce qui permet le fonctionnement de la roue génératrice pour recharger les batteries. Dans le même temps, il est possible d'actionner un interrupteur général du dispositif d'assistance en cas d'absence du taquet de telle manière que la roue motrice ne soit pas activable lorsque le chariot est tracté.

Bien entendu, l'invention n'est pas limitée aux modes de mise en oeuvre décrits mais englobe toute variante entrant dans le champ de l'invention tel que définie par les revendications.

Le rechargement des batteries peut notamment être réalisé soit par l'intermédiaire d'une roue génératrice comme indiqué ci-dessus soit par raccordement des batteries à un chargeur relié au secteur.

Avec les chariots dont la ou les roues sont relevables, le contrôleur pilote le moteur de la roue de telle manière que la roue soit en rotation au moment où elle touche le sol de telle manière que la roue soit également en rotation lorsqu'elle quitte le sol. Bien que cette disposition soit extrêmement avantageuse, il est possible de piloter le moteur de telle manière que la roue ne démarre qu'une fois en contact avec le sol et/ou s'arrête avant de quitter le sol.

Dans le mode de mise en oeuvre décrit, la durée de temporisation commandant l'arrêt de l'alimentation du moteur peut avoir une durée modifiable par exemple en fonction d'un état de charge de la batterie ou en fonction de la masse transportée ou du volume transporté (un capteur correspondant doit donc être prévu et relié au contrôleur).

Il est possible de prévoir en outre une ou plusieurs temporisations portant sur un seul paramètre avec plusieurs seuils correspondants ou portant sur plusieurs paramètres. Ainsi, le procédé de l'invention peut mettre en oeuvre une première durée de temporisation, débutant après l'activation de la roue motrice à un premier niveau d'énergie (couple et vitesse), à la fin de laquelle le moteur est commandé pour fournir un deuxième niveau d'énergie inférieur au premier niveau d'énergie et une deuxième durée de temporisation après laquelle le moteur est commandé pour fournir un troisième niveau d'énergie, inférieur au deuxième niveau d'énergie, et une troisième durée de temporisation après laquelle l'alimentation du moteur est interrompue. La durée et le nombre de temporisations peuvent être modifiables par exemple en fonction d'un état de charge de la batterie ou en fonction de la masse transportée ou du volume transporté (un capteur correspondant doit donc être prévu et relié au contrôleur). En variante, le deuxième niveau d'énergie et/ou le troisième niveau d'énergie peut être supérieur ou égal au précédent.

Lorsque le chariot sert simplement de support à un contenant dont un des bords est utilisé comme organe de manipulation de l'ensemble chariot/contenant, il est possible de prévoir sur le chariot un bouton de commande relié au contrôleur et pourvu des moyens de sa fixation amovible sur le contenant.

L'interrupteur 6 peut être associé à un bouton de commande (poussoir, basculant ou rotatif) ou à tout autre élément permettant son actionnement comme une poignée.

L'invention, dans toutes ses variantes, s'applique à un chariot pourvu d'une roue motorisé mue électriquement ou par toute autre source d'énergie, notamment hydraulique.

Le chariot selon l'invention peut avoir une structure différente de celle décrite et par exemple avoir ses roues disposées en losange, la roue motrice étant montée au centre de ce losange. En variante, deux roues motrices adjacentes peuvent être montées au centre du losange.

## Revendications

1. Chariot comportant un châssis de plateforme (1) auquel est fixée une roue motorisée (3,3a) comportant un contrôleur (4) de son fonctionnement, commandé par au moins un interrupteur (6) situé sur un organe (5) de pilotage manuel du chariot, **caractérisé en ce que** le contrôleur (4) n'autorise un fonctionnement de la roue motorisée (3,3a) qu'à partir de l'activation de l'interrupteur (6) et pour une durée déterminée par temporisation indépendante de l'état de l'interrupteur (6).

2. Chariot selon la revendication 1, dans lequel le contrôleur est agencé pour modifier la durée de temporisation.

3. Chariot selon la revendication 2, dans lequel la durée de temporisation est modifiable en fonction d'un état de charge de la batterie.

4. Chariot selon la revendication 2, dans lequel la durée de temporisation est modifiable en fonction d'une masse transportée.

5. Chariot selon la revendication 1, dans lequel la roue motorisée est montée sur le chariot pour être déplaçable entre une position de contact avec le sol et une position décollée du sol, et le contrôleur est agencé pour piloter le moteur de la roue de telle manière que la roue soit en rotation au moment où elle touche le sol et de telle manière que la roue soit également en rotation lorsqu'elle quitte le sol.

6. Chariot selon la revendication 1, comportant un timon d'attelage articulé à l'avant de la plateforme entre une position relevée et une position rabattue.

7. Chariot selon la revendication 6, comportant une roue génératrice d'énergie électrique reliée aux batteries et des moyens de détection de la position du timon qui sont reliées à un organe de commande de la roue génératrice pour mettre en service ladite roue génératrice lorsque le timon est en position abaissée et mettre hors service la roue génératrice lorsque le timon est en position relevée.

## Patentansprüche

1. Wagen, umfassend ein Plattformgestell (1), an dem ein motorisiertes Rad (3, 3a) befestigt ist, das ein Kontrollgerät (4) zur Kontrolle seines Betriebs umfasst, welches von mindestens einem Schalter (6) gesteuert wird, der sich an einem Organ (5) zur manuellen Steuerung des Wagens befindet, **dadurch gekennzeichnet, dass** das Kontrollgerät (4) einen Betrieb des motorisierten Rades (3, 3a) nur ab der Aktivierung des Schalters (6) und für eine Dauer gestattet, die durch eine Zeitverzögerung bestimmt ist, unabhängig vom Zustand des Schalters (6).

2. Wagen nach Anspruch 1, bei dem das Kontrollgerät ausgebildet ist, um die Verzögerungszeit zu ändern.

3. Wagen nach Anspruch 2, bei dem die Verzögerungszeit in Abhängigkeit von einem Ladezustand der Batterie veränderbar ist.

4. Wagen nach Anspruch 2, bei dem die Verzögerungszeit in Abhängigkeit von einer transportierten Masse veränderbar ist.

5. Wagen nach Anspruch 1, bei dem das motorisierte Rad an dem Wagen verschiebbar zwischen einer Kontaktposition in Kontakt mit dem Boden und einer vom Boden gelösten Position gelagert ist, und das Kontrollgerät ausgebildet ist, um den Motor des Rades derart zu steuern, dass sich das Rad zum Zeitpunkt, wo es den Boden berührt, dreht, und derart, dass sich das Rad ebenfalls dreht, wenn es den Boden verlässt.

6. Wagen nach Anspruch 1, umfassend eine Deichsel, die vorne an der Plattform zwischen einer hochgeklappten Position und einer heruntergeklappten Position angelenkt ist.

7. Wagen nach Anspruch 6, umfassend ein elektrische Energie erzeugendes Rad, das mit Batterien verbunden ist, sowie Mittel zum Erfassen der Position der Deichsel, die mit einem Organ zum Steuern des erzeugenden Rades verbunden sind, um das genannte erzeugende Rad in Betrieb zu setzen, wenn die Deichsel in der abgesenkten Position ist, und außer Betrieb zu setzen, wenn die Deichsel in der hochgeklappten Position ist.

## Claims

1. Cart including a platform chassis (1) to which is attached a motorized wheel (3,3a) including a controller (4) of its operation controlled by at least one switch (6) on a member (5) for manually controlling the cart, **characterized in that** the controller (4) allows operation of the motorized wheel (3,3a) only upon activation of the switch (6) and for a period determined by a time delay independent of the state of the switch (6).

2. Cart according to claim 1, wherein the controller is adapted to modify the time delay.

3. Cart according to claim 2, wherein the time delay can be modified according to a state of charge of the battery.

4. Cart according to claim 2, wherein the time delay can be modified according to the weight transported.

5. Cart according to claim 1, wherein the motorized wheel is mounted on the cart to be movable between a position in contact with the ground and a position off the ground and the controller is adapted to control the motor of the wheel so that the wheel is rotating when it touches the ground and so that the wheel is also rotating when it leaves the ground.

6. Cart according to claim 1, including a drawbar at the front of the platform articulated between a raised position and a folded position.

7. Cart according to claim 6, including an electric power generator wheel connected to the batteries and means for detecting the position of the drawbar connected to a control member of the generator wheel to engage said generator wheel when the drawbar is in the lowered position and to disengage the generator wheel when the drawbar is in the raised position.
